# EUROPEAN PATENT APPLICATION

(11) **EP 1 767 714 A2**
(43) Date of publication of application: **28.03.2007**
(21) Application number: 06018946.1
(22) Date of filing: 11.09.2006
(51) Int. Cl.: E04B 9/04, E04B 9/02, F24D 3/16

(54) **Prefabricated floor and ceiling panel using lightened material**

(30) Priority: 13.09.2005 IT PD20050263
(71) Applicant: American Enterprise s.r.l., 35010 Onara Di Tombolo PD (IT)
(72) Inventor: Severino, Zecchin, 35010 Onara Di Tombolo PD (IT)

(57) **Abstract**

A prefabricated floor and ceiling panel, with a bearing structure formed of a metal structure (1, 2, 3) which is completely incorporated in a matrix (10) of heat-insulating and sound dampening material made from a mixture of super-light grains (preferably coming from or ground recycled materials) with just a small amount of aerial type binder; said panel is immersed above and/or below in the same heat-insulating and sound dampening matrix (10) that contains the metal bearing structure (1, 2, 3), the coil (4, 4') for the circulation of the heating fluids for the floor heating system and cooling fluids for the ceiling cooling system.

## Description

The invention refers to the construction of prefabricated floor and ceiling panels.

The aim of this production is to lower costs because the panels are mass-produced in the factory and the prefabricated panels are then transported to the sites for installation.

With floor panels, a number of panels must be matched together to create the floor according to the project.

To obtain the finished floor, it must be completed with the missing parts.

Self-supporting prefabricated panels are available on the market made using perforated terracotta bricks and plaster ceilings.

Prefabricated panels exist with mixed structures of terracotta and concrete bearing girders.

Other types of prefabricated floors and ceilings exist where the aim is to be cheap and easy to install.

Another problem that arises with the new legislation is given by the limits to thermal dispersion and the required sound dampening levels.

Therefore the problem involves making prefabricated panels that satisfy current legislation, are cheap and lightweight to make them easy to transport and install.

In particular the aim of the invention in this patent is to create floor and ceiling panels that satisfy all the above requirements.

This patented panel is formed of a metal bearing structure, with longitudinal elements, which can be IPE sections currently available on the market, with an amount and resistant moment that satisfies the bearing unit requirements of the floor according to the planner's calculations;

It is formed of heat insulating, sound dampening material made from a mixture rich in polystyrene, polyethylene or other equal resin grains and poor in aerial binder (for example cement);

Said panel can be fitted on the top and/or bottom (even buried in the heat insulating and sound dampening matrix that the bearing metal structure is buried in) with a coil for the circulation of hot fluids for the floor heating system and cold fluids for the ceiling cooling system.

The surface that is fitted to the ceiling has a special mesh, which is anchored to metal rods that are welded transversally to the longitudinal bearing metal sections.

When the panel mixture has solidified, as it is self-bearing, it is taken to the site for installation.

To ensure the low cost of the panels, a granulate or ground material is used of polystyrene, polyethylene or other equal recyclable material, which otherwise would be subject the high disposal costs involved with special materials.

The above patented panel is made as described herein.

For each single panel, the finished width of which must not exceed the maximum allowed for road transport, first of all a bearing structure is made formed of IPE metal sections of height, length and number according to the unit bearing calculations for the floor where the panels will be installed.

At the end of the bottom side of the sections, another section is welded which creates the point of support and keeps the sections at the right distance with respect to the finished side of the ceiling, which is virtually defined by the net that marks off the bottom surface of the matrix that incorporates the bearing structure. This section with the welded ends, when the panel has been installed to make the floor, is also used for welding the section (a C) that is built in flush with the bearing wall of the building, and forms the supporting points.

The metal bearing structure that is constructed separately is fitted inside a formwork, with the size and shape that corresponds to the finished panel.

The formwork is filled with a mixture of heat insulating and sound dampening material as described above.

When the matrix that everything is buried in has solidified, the formwork is removed and the panel is ready for use.

If the panel has the coil fitted for the heating and/or cooling systems (or vice versa), at the start and end of the coils special devices will be used to ensure the incorporating matrix has a sufficient depression to allow connecting the coils with other future panels that will be matched together, to create the floor or ceiling, and allow the installers to make the connections to the manifolds in the walls where the floor or ceiling are being installed.

The description given above is purely an example and is not an indication of any sort of limitation.

The patent is still valid in the event the same procedure, given above to make the prefabricated panels separately ready to be completed in the factory once they are positioned in the formwork with the cast incorporating heat-insulating and sound dampening material, is adopted on site using panels without the matrix needed to complete the floor and making the easy to remove sealing layer, for the entire room at ceiling level, casting the heat insulating and sound dampening material directly on site.

The above description can be clearly seen in the attached drawings.

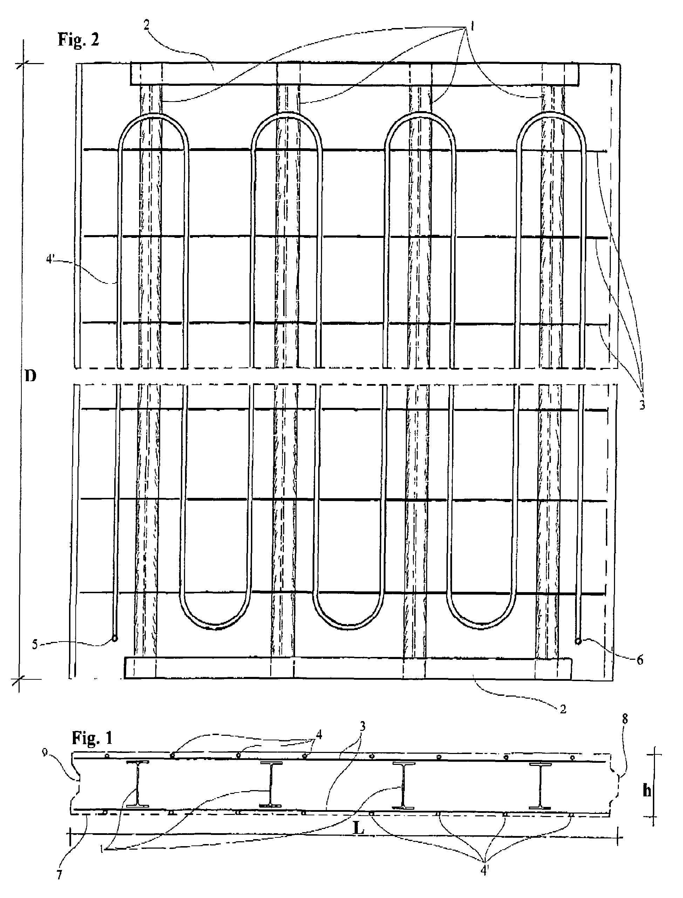

Fig. 1 shows a transversal section of the bearing structure before being installed, without the filling material, with a single panel including the longitudinal metal sections, the metal rods, placed transversally above and below the longitudinal metal sections and welded to them, with the tubular coils placed above and below bound to the metal rods and the mesh spread on the bottom and sides, bound to the metal rods.

Fig. 2 is the surface view of the panel shown in fig. 1, seen from below. We can see the sections fitted at the end of the longitudinal metal sections, laid transversally and duly welded at set intervals to the longitudinal metal sections, and we can see a tubular coil bound to the metal rods. The drawing does not show the net spread on the bottom and sides, to ensure that the drawing is easy to comprehend.

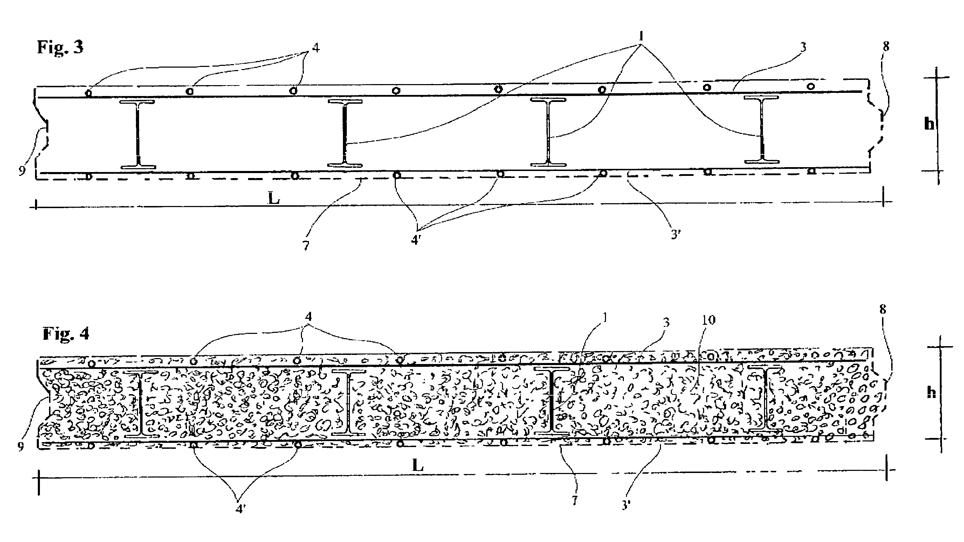

Fig. 3 shows the bearing structure with accessories corresponding to fig. 1 to allow better comparison with fig. 4. Note the configuration of the sides with one jutting side and one recessed side, to improve matching the panels when they are installed.

Fig. 4 is the corresponding representation of fig. 2, where the panel has been completed with the filling material, which, besides being lightweight, also has heat insulating and sound dampening features.

To make the prefabricated panel in this case, where length D and thickness H are supplied by the planner and calculator of the floor, and the width L is limited by the road transport regulations, the sections 1 are chosen with length D, with the number and resistant moment (W) to satisfy the overall capacity required for each single panel.

The ends of the longitudinal sections 1 are welded to the suitably thick sections 2, which form the supporting ends which, after installation (with the complete panel), are welded to their respective metal seats (configured in C) inserted and positioned flush with the bearing wall of the building where the floor made from the panels is installed.

On the top and bottom surfaces, defined by the longitudinal metal sections, the metal rods 3 and 3' are welded transversally to said sections 1, at preset distances.

On the top and bottom surfaces the coils 4 and 4' are installed resting on the metal rods 3 and 3', and are bound in place.

In correspondence with the bottom surface and the sides of the overall construction (1, 2, 3, 3', 4, 4') a net 7 is spread with suitable size mesh, and then the entire structure is placed in a formwork (not shown in the drawing) that can easily be dismantled and removed, and the mixture 10 is cast of the planned composition and features, to fill the formwork and incorporate the entire structure.

When the mixture has solidified the formwork is removed and the panel is ready for transporting.

Note that the formwork is configured on the sides so that a jutting part 8 is formed on one side and a recess 9 is formed on the opposite side of the panel, to allow continuity when the panels are matched together for installation.

Another detail that is not shown in the figure, is that in correspondence with the ends 5 and 6 of the coils 4 and 4', two lowered transversal bands are left in the cast 10, to allow fitting tubular u-bolts to create continuity in the coils in adjacent panels and for fitting the stretches of connection piping between the entrance and exit of the entire coil that is formed, so that it can be connected to the manifolds of the heating and cooling systems prepared in the brick walls.

## Claims

1. Prefabricated floor and ceiling panel made using lightened materials, formed of a metal bearing structure (1, 2, 3) incorporated in a solidified matrix (10) of lightweight material.

2. Prefabricated floor and ceiling panel made using lightened materials as given in claim 1, **characterised by** the fact that the bearing metal structure (1, 2, 3) is prefabricated separately before it is placed in the formwork with the cast of lightened material (10) to fill the formwork and incorporate the structure.

3. Prefabricated floor and ceiling panel made using lightened materials as given in claims 1 and 2, **characterised by** the fact that the bearing part of the prefabricated structure is formed of at least two longitudinal metal sections (1) corresponding to the project data and calculations for the floor or ceiling they will be part of.

4. Prefabricated floor and ceiling panel made using lightened materials as given in the previous claims, **characterised by** the fact that to the bearing longitudinal metal sections (1) other metal sections (2) are welded transversally to the two ends of the bottom surface, suitably thick to form the supporting points on the seats in the building that the panel will be installed in.

5. Prefabricated floor and ceiling panel made using lightened material as given in one or more of the previous claims, **characterised by** the fact that transversally to the longitudinal bearing metal sections (1), metal rods (3) are welded to one or both the surfaces, at preset distances between each other which form the supporting points and elements for binding the tubular coils (4, 4') which are used for the heating and/or cooling systems.

6. Prefabricated floor and ceiling panel made using lightened materials as given in the previous claims, **characterised by** the fact that the tubular coils (4, 4') are fixed to the bottom, the top or both the surfaces of the metal bearing structure (1, 2, 3), which are used for the heating and/or cooling systems.

7. Prefabricated floor and ceiling panel made using lightened materials as given in the previous claims, **characterised by** the fact that in correspondence with the bottom surface a net is applied (7) and bound to the metal rods (3) which are welded transversally to the longitudinal bearing metal sections (1), the net being formed of a special mesh (7) to strengthen the bottom part of the matrix (10) incorporating the metal structure (1, 2, 3) once the prefabricated panel is finished that will be part of the ceiling.

8. Prefabricated floor and ceiling panel made using lightened materials as given in the previous claims, **characterised by** the fact the material used for the incorporating matrix (10), the prefabricated metal structure (1, 2, 3), with or without the tubular coils (4, 4'), is formed of a lightweight granular mixture of polystyrene, polyethylene or other equal material (preferably made by grinding recycled materials) and a low dose of binder, preferably aerial type.

9. Prefabricated floor and ceiling panel made using lightened materials as given in the previous claims, **characterised by** the fact that the formwork where the prefabricated bearing metal structure (1, 2, 3) is placed and where the lightweight material (10) is cast for incorporating the bearing structure (1, 2, 3, 4, 4'), is configured on the sides so that when the formwork is removed after the cast has solidified, the panel has a jutting part on one side (8) and a recess on the other side (9) so as to ensure continuity between adjacent panels once they are installed in the floor.
